(19) Europäisches Patentamt
European Patent Office
Office européen des brevets

(11) Veröffentlichungsnummer: **0 009 091**
**B1**

# (12) EUROPÄISCHE PATENTSCHRIFT

(45) Veröffentlichungstag der Patentschrift: **18.11.81**

(51) Int. Cl.³: **A 01 N 43/56,** A 01 N 25/32

(21) Anmeldenummer: **79102527.3**

(22) Anmeldetag: **18.07.79**

(54) **Verfahren zur selektiven Bekämpfung von unerwünschtem Pflanzenwachstum mit herbiziden Mitteln auf Basis von Acetaniliden und N-Dichloracetyl-2,2-dimethyl-1,3-oxazolidin.**

(30) Priorität: **27.07.78 DE 2832940**

(43) Veröffentlichungstag der Anmeldung: **02.04.80 Patentblatt 80/7**

(45) Bekanntmachung des Hinweises auf die Patenterteilung: **18.11.81 Patentblatt 81/46**

(84) Benannte Vertragsstaaten: **AT BE CH DE FR GB IT LU NL SE**

(56) Entgegenhaltungen:
EP-A-0 001 751
FR-A-2 215 170
FR-A-2 368 476
FR-A-2 379 525
NL-A-72 04 894
US-A-4 053 297

(73) Patentinhaber: **BASF Aktiengesellschaft, Carl-Bosch-Strasse 38, D-6700 Ludwigshafen (DE)**

(72) Erfinder: **Hansen, Hanspeter, Dr. Chem., Thorwaldsenstrasse 5, D-6700 Ludwigshafen (DE)**
Erfinder: **Eicken, Karl, Dr. Chem., Waldstrasse 63, D-6706 Wachenheim (DE)**
Erfinder: **Wuerzer, Bruno, Dr. Dipl.-Landwirt, Wilhelm-Busch-Strasse 55, D-6703 Limburgerhof (DE)**

**EP 0 009 091 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur selektiven Bekämpfung von unerwünschtem Pflanzenwachstum mit herbiziden Mitteln auf Basis von Acetaniliden und N-Dichloracetyl-2,2-dimethyl-1,3-oxazolidin

Die vorliegende Anmeldung betrifft herbizide Mittel, die substituierte Acetanilide als herbizide Wirkstoffe und N-Dichloracetyl-2,2-dimethyl-1,3-oxazolidin als antagonistisches Mittel enthalten, sowie Verfahren zur selektiven Bekämpfung von unerwünschtem Pflanzenwuchs mit diesen herbiziden Mitteln.

Substituierte Acetanilide der Formel I

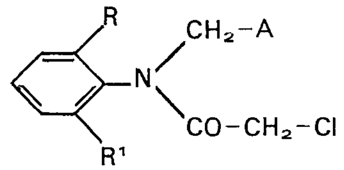

(I)

in der

R Methyl oder Äthyl,

$R^1$ Methyl oder Äthyl und

A einen gegebenenfalls durch Methylreste in 3- und 5-Stellung substituierten, über ein Ringstickstoffatom gebundenen Pyrazolrest bedeuten,

sind herbizid ausgezeichnet wirksam (FR-A-2 368 476), führen aber bei Anwendung in Mais zu Schädigungen der Nutzpflanzen.

Aufgabe der Erfindung war es deshalb, antagonistische Mittel zu finden, die diese Unverträglichkeit der herbiziden Acetanilide gegenüber Mais kompensieren.

Antagonistische Mittel (Antidots) sind chemische Verbindungen, durch deren Präsenz eine Steigerung der Verträglichkeit von für bestimmte Kulturpflanzen nicht oder nicht ausreichend selektiven herbiziden Wirkstoffen erreicht wird. Die Aktivität der herbiziden Wirkstoffe gegen unerwünschte Pflanzen bleibt dabei unbeeinflußt.

Herbizide Mittel, die neben Chloracetaniliden als herbiziden Wirkstoffen antagonistisch wirkende Dichloracetamide enthalten, sind aus der US-A-4 053 297, der DE-A-22 18 097 und der DE-A-24 02 983 bekannt. Unter anderem werden in diesen Schriften Dichloracetamide als mögliche Antidots erwähnt, bei denen die beiden Substituenten am Stickstoffatom zusammen mit diesem einen heterocyclischen Ring, der noch ein weiteres Heteroatom enthalten und durch Alkylgruppen substituiert sein kann, bilden. Als Vertreter dieser Verbindungsklasse wird unter anderem N-Dichloracetyl-2,2-dimethyl-1,3-oxazolidin genannt.

In der DE-A-22 18 097 wird diese antagonistisch wirkende Verbindung jedoch nur in Kombination mit herbizid wirksamen Thiolcarbamaten empfohlen, während aus der DE-A-24 02 983 und der US-A-4 053 297 bekannt ist, daß N-Dichloracetyl-2,2-dimethyl-1,3-oxazolidin sich als Antidot zur Reduzierung der bei der Verwendung herbizid wirksamer Chloracetanilide auftretenden Schädigungen an Mais eignet. Die hier verwendeten Chloracetanilide tragen am Stickstoff neben der Chloracetylgruppe substituierte Alkyl-, Alkoxyalkyl-, Alkenyloxyalkyl- oder Cycloalkyloxyalkylreste oder über eine Methylengruppe gebundene, Sauerstoff- und/oder Schwefelhaltige gesättigte Ringe.

Es wurde gefunden, daß N-Dichloracetyl-2,2-dimethyl-1,3-oxazolidin sich zur Steigerung der Kulturpflanzenverträglichkeit der herbiziden substituierten Acetanilide der Formel I eignet. Herbizide Mittel, die mindestens ein substituiertes Acetanilid der Formel I und N-Dichloracetyl-2,2-dimethyl-1,3-oxazolidin enthalten, können ohne Schwierigkeiten in Mais eingesetzt werden. Dabei bleibt die gute herbizide Wirkung der Acetanilide erhalten, während Schädigungen an den Nutzpflanzen unterbunden werden.

Acetanilide, deren Kulturpflanzenverträglichkeit durch N-Dichloracetyl-2,2-dimethyl-1,3-oxazolidin verbessert werden kann, sind solche, bei denen R für Methyl oder Äthyl, $R^1$ für Methyl oder Äthyl und A für einen über ein Ringstoffatom gebundenen Pyrazol- oder 3,5-Dimethylpyrazolrest stehen.

Die erfindungsgemäßen herbiziden Mittel enthalten beispielsweise folgende Acetanilide: 2-Chlor-2',6'-dimethyl-N-(pyrazol-1-yl-methyl)-acetanilid, 2-Chlor-2'-methyl-6'-äthyl-N-(pyrazol-1-yl-methyl)-acetanilid oder 2-Chlor-2',6'-dimethyl-N-(3,5-dimethylpyrazol-1-yl-methyl)-acetanilid.

Ein besonders bevorzugtes erfindungsgemäßes Mittel enthält neben N-Dichloracetyl-2,2-dimethyl-1,3-oxazolidin 2-Chlor-2',6'-dimethyl-N-(pyrazol-1-yl-methyl)-acetanilid als herbiziden Wirkstoff.

Die Acetanilide der Formel I sind Gegenstand der DE-A-2 48 008. Sie können durch Umsetzung von 2-Halogen-N-halogenmethylacetaniliden der Formel II mit einem 1 H-Azol der Formel H-A nach folgender Reaktionsgleichung erhalten werden:

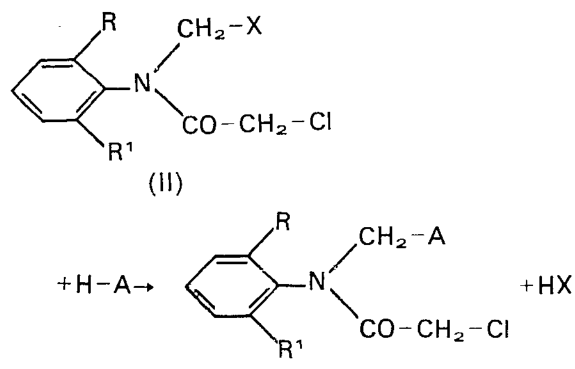


(II)

(I)

Dabei haben die Substituenten R, $R^1$ und A die obengenannten Bedeutungen; X bedeutet Chlor oder Brom.

Die Herstellung von N-Dichloracetyl-2,2-dimethyl-1,3-oxazolidin ist in der DE-A-22 18 097 und der DE-A-24 02 983 beschrieben.

N-Dichloracetyl-2,2-dimethyl-1,3-oxazolidin hat selbst keinen oder einen kaum sichtbaren Einfluß auf Keimung und Wachstum sowohl von Kulturpflanzen als auch von unerwünschten Pflanzen,

selbst bei Aufwandmengen, welche beträchtlich über denjenigen liegen, welche zur Erzielung eines antagonistischen Effektes benötigt werden. Es hat jedoch die Fähigkeit, die Phytotoxizität der herbiziden Acetanilide der Formel I gegenüber Mais beachtlich zu reduzieren oder völlig zu eliminieren.

Für herbizide Acetanilide, die gegenüber den Kulturpflanzen wenig aggressiv sind, genügen geringe Zusätze an N-Dichloracetyl-2,2-dimethyl-1,3-oxazolidin. Das Anteilsverhältnis Acetanilid: N-Dichloracetyl-2,2-dimethyl-1,3-oxazolidin kann stark schwanken; es hängt vom Acetanilid ab. Geeignete Anteilsverhältnisse herbizider Wirkstoff: N-Dichloracetyl-2,2-dimethyl-1,3-oxazolidin liegen zwischen 1:2 bis 1:0,01 Gewichtsteilen.

Acetanilide und Antagonist können gemeinsam oder getrennt, vor oder nach der Saat, in den Boden eingearbeitet werden. Für die Acetanilide der Formel I ist das gebräuchlichste Anwendungsverfahren die Ausbringung auf die Erdoberfläche unmittelbar nach Ablage der Samen oder in der Zeit zwischen Einsaat und Auflaufen der jungen Pflanzen. Auch eine Behandlung während des Auflaufens und kurz danach ist möglich. In jedem Fall kann die antagonistisch wirkende Verbindung gleichzeitig mit dem herbiziden Wirkstoff ausgebracht werden. Auch eine getrennte Ausbringung, wobei der Antagonist zuerst und anschließend das Herbizid oder umgekehrt auf das Feld gebracht werden, ist möglich, sofern im letzteren Fall nicht soviel Zeit verstreicht, daß das Herbizid bereits Schaden an den Kulturpflanzen angerichtet hat. Herbizid und Antagonist können hierbei als Spritzmittel in suspendierbarer, emulgierbarer oder löslicher Form oder als Granulate, getrennt oder gemeinsam formuliert, vorliegen. Denkbar ist auch eine Behandlung der Kulturpflanzensamen mit dem Antagonisten vor der Aussaat. Das Herbizid wird dann allein in der üblichen Weise appliziert.

Die neuen herbiziden Mittel können neben Acetanilid und Antagonist weitere herbizide oder wachstumsregulierende Wirkstoffe anderer chemischer Struktur, beispielsweise 2-Chlor-4-äthylamino-6-isopropylamino-1,3,5-triazin, enthalten, ohne daß der antagonistische Effekt des N-Dichloracetyl-2,2-dimethyl-1,3-oxazolidin beeinflußt wird.

Die erfindungsgemäßen Mittel bzw. bei getrennter Ausbringung die herbiziden Wirkstoffe oder das Antidot werden beispielsweise in Form von direkt versprühbaren Lösungen, Pulvern, Suspensionen, auch hochprozentige wäßrige, ölige oder sonstige Suspensionen, oder Dispersionen, Emulsionen, Öldispersionen, Pasten, Stäubemitteln, Streumitteln oder Granulaten durch Versprühen, Vernebeln, Verstäuben, Verstreuen oder Gießen angewendet. Die Anwendungsformen richten sich ganz nach den Verwendungszwekken; sie sollten in jedem Fall möglichst die feinste Verteilung der erfindungsgemäßen Mittel bzw. der Einzelkomponenten gewährleisten.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteeröle, sowie Öle pflanzlichen oder tierischen Ursprungs, aliphatische, cyclische oder aromatische Kohlenwasserstoffe, zum Beispiel Benzol, Toluol, Xylol, Paraffin, Tetrahydronaphthalin, alkylierte Naphthaline oder deren Derivate zum Beispiel Methanol, Äthanol, Propanol, Butanol, Chloroform, Tetrachlorkohlenstoff, Cyclohexanol, Cyclohexanon, Chlorbenzol, Isophoron, stark polare Lösungsmittel, wie z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können herbizider Wirkstoff und/oder Antidot als solche oder in einem Öl oder Lösungsmittel gelöst, mittels Netz-, Haft-, Dispergier- oder Emulgiermittel in Wasser homogenisiert werden. Es können aber auch aus herbizidem Wirkstoff und/oder Antidot Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen in Betracht: Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylähtersulfat, Fettalkoholsulfate, fettsaure Alkali- und Erdalkalisalze, Salze sulfatierter Hexadecanole, Heptadecanole, Octadecanole, Salze von sulfatierten Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylenoctylphenoläther, äthoxyliertes Isooctylphenol-, Octylphenol, Nonylphenol, Alkylphenolpolyglykoläther, Tributylphenylpolyglykoläther, Alkylarylpolyätheralkohole, Isotridecylalkohol, Fettalkoholäthylenoxid-Kondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylcellulose.

Pulver, Streu- und Stäubemittel können durch Mischen oder gemeinsames Vermahlen von herbizidem Wirkstoff und/oder Antidot mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden wie Silicagel, Kieselsäuren, Kieselgele, Silikate, Talkum, Kaolin, Attaclay, Kalkstein, Kreide, Talkum, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehle, Baumrinden-, Holz- und

Nußschalenmehl, Cellulosepulver und andere feste Trägerstoffe.

Die Formulierungen enthalten zwischen 0,1 und 95 Gewichtsprozent an herbizidem Wirkstoff und Antidot, vorzugsweise zwischen 0,5 und 90 Gewichtsprozent. Die Aufwandmengen an herbizidem Wirkstoff betragen 0,2 bis 5 kg/ha. Diese Menge an herbizidem Wirkstoff wird, gemeinsam oder getrennt, mit einer solchen Menge an Antidot ausgebracht, daß das Anteilsverhältnis herbizider Wirkstoff: antagonistischer Verbindung 1:2 bis 1:0,01 Gewichtsteile beträgt.

Beispiele für Formulierungen sind:

I. 40 Gewichtsteile der Mischung aus vier Gewichtsteilen 2-Chlor-2',6'-dimethyl-N-(pyrazol-1-yl-methyl)-acetanilid und einem Gewichtsteil N-Dichloracetyl-2,2-dimethyl-1,3-oxazolidin werden mit 10 Teilen Natrium salz eines Phenolsulfonsäureharnstoffformaldehyd-Kondensats, 2 Teilen Kieselgel und 48 Teilen Wasser innig vermischt. Man erhält eine stabile wäßrige Dispersion. Durch Verdünnen mit 100 000 Gewichtsteilen Wasser erhält man eine wäßrige Dispersion, die 0,04 Gewichtsprozent Wirkstoff enthält.

II. 3 Gewichtsteile der Mischung aus einem Gewichtsteil 2-Chlor-2',6'-dimethyl-N-(pyrazol-1-yl-methyl)-acetanilid und einem Gewichtsteil N-Dichloracetyl-2,2-dimethyl-1,3-oxazolidin werden mit 97 Gewichtsteilen feinteiligem Kaolin innig vermischt. Man erhält auf diese Weise ein Stäubemittel, das 3 Gewichtsprozent des Wirkstoffs enthält.

III. 20 Teile der Mischung aus acht Gewichtsteilen 2-Chor-2'-methyl-6'-äthyl-N-(pyrazol-1-yl-methyl)-acetanilid und einem Gewichtsteil N-Dichloracetyl-2,2-dimethyl-1,3-oxazolidin werden mit 2 Teilen Calciumsalz der Dodecylbenzolsulfonsäure, 8 Teilen Fettalkoholpolyglykoläther, 2 Teilen Natriumsalz eines Phenolsulfonsäureharnstoff-formaldehyd-Kondensats und 68 Teilen eines paraffinischen Mineralöls innig vermischt. Man erhält eine stabile ölige Dispersion.

Gewächshausversuche zeigen, daß bei Anwendung der erfindungsgemäßen herbiziden Mittel die Verträglichkeit der herbiziden Acetanilide für die Kulturpflanzen gesteigert wird, ohne daß die herbizide Aktivität reduziert wird.

Hierbei wurden Plastikpikierkisten von 51 cm Länge, 32 cm Breite und 6 cm Höhe mit lehmigem Sand oder sandigem Lehm von pH 6 bis 7 und etwa 1,5% Humus gefüllt. In dieses Substrat wurde Mais (Zea mays) als Kulturpflanze in Reihen flach eingesät. Außerdem wurde Hühnerhirse (Echinochloa crus galli) als unerwünschte Pflanze breitwürfig hinzugegeben. Der nicht sterilisierte Boden enthielt zusätzlich lebensfähige Unkrautsamen, welche zur Population unerwünschter Pflanzen beitrugen. Dadurch wurde ein mit Kulturpflanzen bestellter und mit Unkräutern verseuchter Acker simuliert.

Die Wirkstoffe und die antagonistisch wirkende Verbindung wurden sowohl einzeln als auch in den beschriebenen Mischungen ausgebracht. Sie wurden, emulgiert oder suspendiert in Wasser als Trägermedium, mittels fein verteilender Düsen unmittelbar nach der Saat und vor Auflaufen der Testpflanzen auf die Erdoberfläche gespritzt. Nach Einsaat und Behandlung werden die Kisten beregnet und bis nach dem Auflaufen der Pflanzen mit durchsichtigen Plastikhauben abgedeckt. Durch diese Maßnahme wurde ein gleichmäßiges Keimen und Anwachsen der Pflanzen garantiert. Die Aufstellung erfolgte in einem Temperaturbereich von durchschnittlich 18 bis 30°C. Die so angelegten Gewächshausversuche wurden beobachtet, bis der Mais 3 bis 5 Blätter entwickelt hatte.

Die Mitteleinwirkung wurde nach einer Skala von 0 bis 100 bewertet. Hierbei bedeutet 0 normaler Aufgang und normale Entwicklung der Pflanzen, bezogen auf die unbehandelte Kontrolle. 100 entspricht einem völligen Ausbleiben der Keimung bzw. Absterben der Pflanzen. Es mußte dabei berücksichtigt werden, daß z.B. bei Mais auch unter völlig normalen Verhältnissen und ohne jede chemische Behandlung vereinzelt verkrüppelte oder gehemmte Pflanzen vorkommen.

Die folgende Tabelle zeigt, in welchem Maße N-Dichloracetyl-2,2-dimethyl-1,3-oxazolidin die Verträglichkeit von Acetaniliden der Formel I, beispielsweise von 2-Chlor-2',6'-dimethyl-N-(pyrazol-1-yl-methyl)-acetanilid, in Mais steigert.

Tabelle — Verbesserung der Maisverträglichkeit von 2-Chlor-2',6'-dimethyl-N-(pyrazol-1-yl-methyl)-acetanilid durch N-Dichloracetyl-2,2-dimethyl-1,3-oxazolidin bei Vorauflaufanwendung im Gewächshaus

| Herbizider Wirkstoff | Antagonistische Verbindung | Aufwandmenge (kg/ha a.S.) | Testpflanzen und Schädigung (%) | |
|---|---|---|---|---|
| | | | Zea mays | Echinochloa crus galli |
| 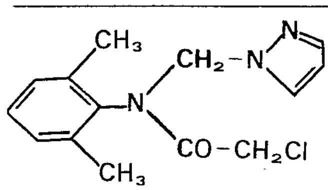 A | — | 1,0<br>2,0 | 64<br>79 | 99<br>99 |

| Herbizider Wirkstoff | Antagonistische Verbindung | Aufwandmenge (kg/ha a.S.) | Testpflanzen und Schädigung (%) | |
|---|---|---|---|---|
| | | | Zea mays | Echinochloa crus galli |
| | I 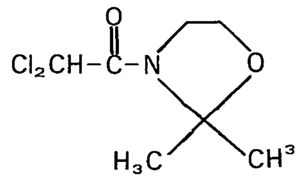 | 4,0 | 2 | 0 |
| A | +I | 1,0+0,25<br>1,0+2,0<br>2,0+0,5<br>2,0+2,0 | 15<br>10<br>14<br>10 | 98<br>98<br>99<br>100 |

0 = normaler Aufgang, keine Schädigung
100 = Pflanzen nicht aufgelaufen oder abgestorben

## Patentansprüche

1. Herbizides Mittel zur selektiven Bekämpfung unerwünschten Pflanzenwuchses in Mais, *gekennzeichnet durch* einen Gehalt an einem substituierten Acetanilid der Formel I

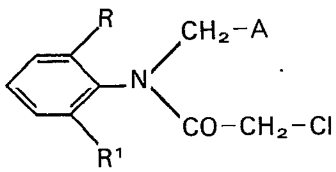 (I)

in der
R Methyl oder Äthyl,
$R^1$ Methyl oder Äthyl und
A einen gegebenenfalls durch Methylreste in 3- und 5-Stellung substituierten, über ein Ringstickstoffatom gebundenen Pyrazolrest bedeuten, als herbizidem Wirkstoff und N-Dichloracetyl-2,2-dimethyl-1,3-oxazolidin als antagonistischem Mittel.

2. Herbizides Mittel nach Anspruch 1, *dadurch gekennzeichnet*, daß es als herbiziden Wirkstoff 2-Chlor-2',6'-dimethyl-N-(pyrazol-1-yl-methyl)-acetanilid enthält.

3. Herbizides Mittel nach Anspruch 1, *dadurch gekennzeichnet*, daß das Anteilsverhältnis Acetanilid: N-Dichloracetyl-2,2-dimethyl-1,3-oxazolidin 1:2 bis 1:0,01 Gewichtsteile beträgt.

4. Verfahren zur selektiven Bekämpfung von unerwünschtem Pflanzenwuchs in Mais, *dadurch gekennzeichnet*, daß man herbizide Mittel nach Anspruch 1 vor, bei oder nach der Aussaat der Kulturpflanzen, vor oder während des Auflaufens der Kulturpflanzen ausbringt.

5. Verfahren zur selektiven Bekämpfung von unerwünschtem Pflanzenwuchs in Mais, *dadurch gekennzeichnet*, daß man substituierte Acetanilide der Formel I und N-Dichloracetyl-2,2-dimethyl-1,3-oxazolidin vor, bei oder nach der Aussaat der Kulturpflanzen, vor oder während des Auflaufens der Kulturpflanzen gleichzeitig oder nacheinander in beliebiger Reihenfolge ausbringt.

## Claims

1. A herbicidal agent for the selective control of unwanted plant growth in Indian corn, *characterized in that* it contains a substituted acetanilide of the formula I

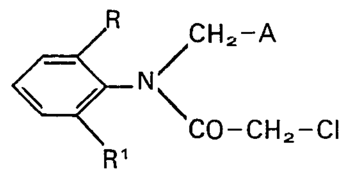 (I)

where
R denotes methyl or ethyl,
$R^1$ denotes methyl or ethyl, and
A denotes a pyrazole radical which may be substituted by methyl groups in the 3- and 5-positions and which is attached via a ring nitrogen atom,
as herbicidal active ingredient and N-dichloroacetyl-2,2-dimethyl-1,3-oxazolidine as antagonistic agent.

2. A herbicidal agent as claimed in claim 1, *characterized in that* it contains 2-chloro-2',6'-dimethyl-N-(pyrazol-1-yl-methyl)-acetanilide as herbicidal active ingredient.

3. A herbicidal agent as claimed in claim 1, *characterized in that* the ratio of acetanilide to N-dichloroacetyl-2,2-dimethyl-1,3-oxazolidine is from 1:2 to 1:0.01 parts by weight.

4. A process for the selective control of unwanted plant growth in Indian corn, *characterized in that* a herbicidal agent as claimed in claim 1 is applied before, during or after sowing of the crop plants, or before or during emergence of the crop plants.

5. A process for the selective control of unwanted plant growth in Indian corn, *characterized in that* a substituted acetanilide of the formula I and N-dichloroacetyl-2,2-dimethyl-1,3-oxazolidine are applied before, during or after sowing of the crop plants, or before or during emergence of the

crop plants, either simultaneously or one after the other in any order.

**Revendications**

1. Agent herbicide pour la lutte sélective contre la croissance indésirable des plantes dans le maïs, caractérisé par une teneur en un acétanilide substitué de formule I

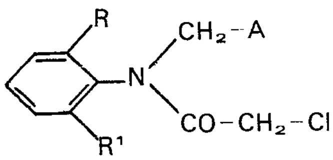

(I)

dans laquelle

R représente méthyle ou éthyle,

$R^1$ méthyle ou éthyle, et

A un reste pyrazole, relié par l'intermédiaire d'un azote du cycle, éventuellement substitué par des restes méthyle en position 3 et 5, en tant que principe actif herbicide, et en tant qu'agent antagoniste, en N-dichloracétyl-2,2-diméthyl-1,3-oxazolidine.

2. Agent herbicide selon la revendication 1, caractérisé par le fait qu'il contient, comme principe actif herbicide, du 2-chloro-2',6'-diméthyl-N-(pyrazol-1-yl-méthyl)-acétanilide.

3. Agent herbicide selon la revendication 1, caractérisé par le fait que le rapport acétanilide: N-dichloracétyl-2,2-diméthyl-1,3-oxazolidine est de 1:2 à 1:0,001 parties en poids.

4. Procédé de lutte sélective contre la croissance indésirable des plantes dans le maïs, caractérisé par le fait que l'on répand un agent herbicide selon la revendication 1 avant, au moment de, ou après l'ensemencement des plantes de culture, avant ou pendant la levée des plantes de culture.

5. Procédé de lutte sélective contre la croissance indésirable des plantes dans le maïs, caractérisé par le fait que l'on répand simultanément ou l'un après l'autre dans un ordre quelconque des acétanilides substitués de formule I et du N-dichloracétyl-2,2-diméthyl-1,3-oxazolidine, avant, au moment de, ou après l'ensemencement des plantes de culture, avant ou pendant la levée des plantes de culture.